# EUROPEAN PATENT APPLICATION

(11) **EP 1 043 278 A1**
(43) Date of publication of application: **11.10.2000**
(21) Application number: 99201156.9
(22) Date of filing: 09.04.1999
(51) Int. Cl.: C03B 23/023

(54) **A covering material comprising a textile product with poly(P-Phenylene-2,6-Benzobisoxazole) fibers**

(71) Applicant: N.V. BEKAERT S.A., 8550 Zwevegem (BE)
(72) Inventor: Vanhuysse, Boudewijn, 9860 Scheldewindeke (BE); Van Steenlandt, Wim, 9100 Sint-Niklaas (BE)
(74) Representative: Messely, Marc, Ir.

(57) **Abstract**

A covering material, resistant to high temperatures and intended to be inserted between tools and plates of hot glass during glass heating, bending or tempering processes, wherein said covering material comprises a textile product, characterized in that said textile product comprises poly(p-phenylene-2,6-benzobisoxazole) fibers.

## Description

### Field of the invention.

The invention relates to a covering material, resistant to high temperatures and intended to be inserted between tools and plates of hot glass during glass heating, bending or tempering processes.

### Background of the invention.

Various covering materials have been proposed in the literature.

As a matter of example, EP 0447785 discloses covering materials for glass bending moulds.

In EP 0312439 and FR 2739616, covering materials based on metal fibers have been described. These covering materials are adapted to cover tools, contacting glass during tempering processes.

Also covering materials which comprise metal fibers to cover transporting rollers are known in the art, e.g. from US 5565013.

Usually, covering materials provided by using metal fibers are applied, because of the good resistance against mechanical actions of the glass on the surface of the covering material, during the use of the covering material at high temperatures. However, when a metal fiber covering material is too cold, compared to the temperature of the hot glass plate, the contact of the colder covering material with the heated glass plate can cause spontaneously tempering. This means that thermal energy is drained away from the glass at the contacting points, due to the good thermal conductivity of the metal fibers, causing local tensions in the glass. This can lead to glass breakage during further process and use of the glass. As an example, such heat differences can appear when using metal fiber covering materials on tempering rings or on moulds, on which glass plates are formed, standing outside the furnace, in which the glass is heated. This latter technique of moulding glass plates is called "out of furnace" bending.

Other covering materials known in the art are provided using glass fibers. These covering materials do not have a thermal conductivity that can lead to spontaneously tempering, but they do not resist for long time the repetitive mechanical actions of the glass on its surface.

### Summary of the invention.

The invention relates to an alternative covering material which cause less spontaneously tempering and which provides better resistance against the mechanical action of the hot glass plate against its surface.

A covering material, comprises a textile product which is provided by the use of poly(p-phenylene-2,6-benzobisoxazole) fibers is proposed. These fibers are provided to the textile fabric as staple or multifilament fibers, multifilament yarns or spun yarns. The textile fabric comprises mainly or only poly(p-phenylene-2,6-benzobisoxazole) fibers, also known as ZYLON® from TOYOBO co. ltd.

The covering materials as subject of the invention can be used in circumstances where the temperature is not too high. Too high a temperature could cause degeneration of the poly(p-phenylene-2,6-benzobisoxazole) fibers. Such degeneration of poly(p-phenylene-2,6-benzobisoxazole) fibers was noticed for example at temperatures of 550°C after 1 hour.

The benefit of poly(p-phenylene-2,6-benzobisoxazole) fiber covering material compared to metal fiber textile covering materials, is that the risk on spontaneous tempering of the glass contacting a colder covering material is limited. An extra benefit is that the weight of the covering product can be reduced.

The benefit of poly(p-phenylene-2,6-benzobisoxazole) fiber covering material compared to glass or ceramic fiber covering materials, is that the resistance against mechanical action on the covering material is improved, using poly(p-phenylene-2,6-benzobisoxazole) fibers.

Further, poly(p-phenylene-2,6-benzobisoxazole) fiber yarns are much easier to be transformed into textile material, such as woven, braided or knitted fabrics, compared to glass fiber yarn of metal fiber yarn. Yarn rupture occurs less frequently, causing less production stops. Also fiber rupture occurs less frequently providing a less hairy fabric surface.

Various types of covering materials can be obtained by using poly(p-phenylene-2,6-benzobisoxazole) fibers.

Poly(p-phenylene-2,6-benzobisoxazole) fibers can be used to provide knitted fabrics, either weft or warp knitted fabrics. These knitted fabrics can be single or double bed knitted fabrics, obtainable on circular or flat knitting machines.

In case of double bed weft knitted fabrics, rib type knitted structures can be used to provide the knitted fabric. Such fabrics are stretchable to a large extend and are suitable to cover e.g. transport rollers, transporting the hot glass plate in the glass heating, bending and/or tempering process.
Rib type knitting structures are double bed weft knitting structures where alternately a needle on the front needle bed and a needle on the back needle bed make a stitch.

In case the covering material comprises a single bed weft knitted fabric, a single jersey type knitted fabric, e.g. "single jersey 1/3" can be used. A knitting structure "single jersey 1/3" is a single bed weft knitting structure where each row of stitches is made out of three yarns. All needles in the bed are grouped per three. The first yarn makes stitches on every first needle of each group of needles on the needle bed, where the second yarn is knitted in the same stitch row on every second needle of each group of needles. The third yarn is knitted on every third needle of each group of needles.
These knitted fabrics can be used to cover e.g. moulds against which the hot glass plat is blown or pressed.

To prevent the knitted fabric from sagging, which means the fabric tends to enlarge when hung because of its own weight, inlay yarns, incorporated in the knitting structure by using tuck stitches, can be applied. To reduce the risk on impressions of the knitted fabric in the hot glass plate, e.g. by pressing, more stitches per surface unit can be applied. This can be done by using higher machine gauge or by adjusting the machine settings. The machine gauge is the number of needles per inch on the surface of the needle bed. Machine gauges of 5 to 32 can be used.

Also warp knitting fabrics are in the scope of the invention. They can be foreseen from polygonal openings, to make the knitted fabric more permeable to air. These openings are provided by using different knitting structures, using mutual transfer of stitches between adjacent stitch wales, or by using inlay yarns of fall plate techniques. Double and single bed knitted warp structures can be used. These warp knitted fabrics can be used to cover rings, which support the glass plate during tempering operation.

It is also in the scope of the invention to provide to the covering material, comprising a knitted fabric using poly(p-phenylene-2,6-benzobisoxazole) fibers, a knitted fabric which has different zones, each zone having its specific weight, thickness, air permeability and other properties, at least one zone comprising poly(p-phenylene-2,6-benzobisoxazole) fibers.

In general, stitch height and stitch width, machine gauge and machine settings are to be chosen to provide properties, as an example and not restrictive, a knitted fabric density, thickness, air permeability weight and other properties as required for the application of the covering material. Machines with gauges between 5 and 32 can be applied, providing knitted fabrics with thickness between 0.1 cm and 1 cm.

A covering material as subject of the invention can also comprise a woven fabric, provided by the use of poly(p-phenylene-2,6-benzobisoxazole) fibers. Depending on the requirements by the covering material, different weaving structures, such as a plain woven structure, a satin structure, a twill structure or an atlas structure can be used to provide a woven structure comprising poly(p-phenylene-2,6-benzobisoxazole) fibers. Woven fabrics can be used to cover supporting rings or guides in glass heating, bending and tempering processes.

A covering material as subject of the invention can also comprise a braided fabric, provided by the use of poly(p-phenylene-2,6-benzobisoxazole) fibers. Depending on the requirements by the covering material, it can be braided flat of tubular. Tubular braided fabrics can e.g. be used to cover transport rollers in glass heating, bending or tempering processes.

A covering material as subject of the invention can also comprise a needle punched fabric, provided by the use of poly(p-phenylene-2,6-benzobisoxazole) fibers. Depending on the requirements by the covering material, it can be needle punched flat of tubular. Tubular needle punched fabrics can e.g. be used to cover transporting rollers in glass heating, bending or tempering processes. Flat needle punched fabrics can be used to cover supporting rings rollers in glass heating, bending or tempering processes. To improve resistance against mechanical wear, these needle punched materials can be calandered and so made more compact and dense. To increase the air permeability, they can be perforated by means of laser cutting, dye cutting or other perforating processes, known in the art. Such needle punched, perforated and eventually calandered fabrics can be used to cover tempering rings, supporting the hot glass plate during tempering processes.

The person skilled in the art understands that requirements such, as an example and not restrictive, density, thickness, weight and air permeability can be provided by choosing the correct fabric type, structures and machine settings.

The person skilled in the art also understands that, to provide knitted, woven or braided fabrics, either spun poly(p-phenylene-2,6-benzobisoxazole) fibers yarn or multifilament poly(p-phenylene-2,6-benzobisoxazole) fibers can be used. The number of fibers per yarn section, the metrical number of the yarns, the fiber diameter and staple length in case of staple fibers can be chosen and changed to meet the requirements of the covering material. The number of fibers per yarn section can be between 4000 and 40, e.g. between 2000 and 40 or even between 1000 and 40. Metrical numbers can be chosen between 0.5 and 90, e.g. between 0.7 and 70. Staple length can vary between 20 and 200 mm. The metrical number of a yarn is the length of the yarn, expresses in meter, provided by 1 gram of this yarn.

Also the other fiber properties such as crimp and/or yarn properties such as e.g. torsion direction, either S or Z, single yarn or plied yarn, number of torsion and twine, can be chosen in function of the requirements, demanded by the covering material. Number of torsion and/or twine is to be situated between 10 and 1000 turns per meter, best between 20 and 500, or even between 50 and 250.

### Brief description of the drawings.

The invention will now be described into more detail with reference to the accompanying drawings wherein
- FIGURE 1 is an enlarged view of a single jersey 1/3 knitted product.
- FIGURE 2 is a schematic view of a rib knitting structure.
- FIGURE 3 is an enlarged view of a single bed warp knitted structure.
- FIGURE 4 is a view of an Atlas woven product.

### Description of the preferred embodiments of the invention.

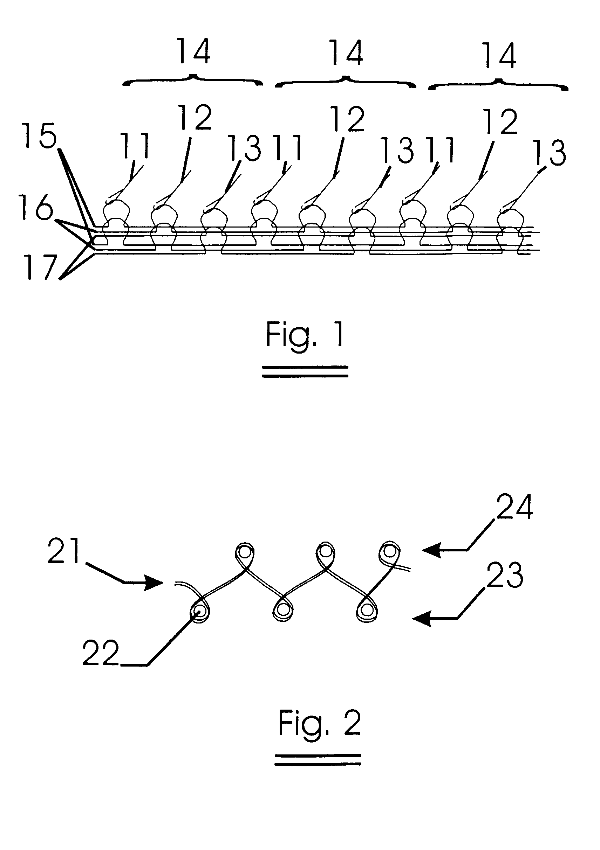

An embodiment of the invention is shown in figure 1, which is a view of a single bed weft knitting structure, called "single jersey 1/3". All needles in the needle bed are grouped per 3. Every first needle 11 of each needle group 14 knits the first yarn 15. Every second needle 12 of each needle group 14 knits the second yarn 16. Every third needle 13 of each needle group 14 knits the third yarn 17. The knitted fabric is so provided by using 3 yarns 15, 16 and 17. A knitted fabric as subject of the invention is provided by using a circular knitting machine, gauge 12 and using poly(p-phenylene-2,6-benzobisoxazole) fiber spun yarn for the yarns 15, 16 and 17. These poly(p-phenylene-2,6-benzobisoxazole) fiber spun yarns have a metrical number 34 .

It is clear that alternative embodiments as subject of the invention are provided by using poly(p-phenylene-2,6-benzobisoxazole) fiber multifilament yarns, having metrical numbers between 0.5 and 90, or poly(p-phenylene-2,6-benzobisoxazole) fiber spun yarns with a different metrical number, e.g. between 0.5 and 90. Also other knitting structures, such as single jersey 1/2 and single jersey 1/4 can be used. Other machines, either circular or flat weft knitting machines with a gauge between 5 and 32 can be used.

An other embodiment is shown in figure 2, which shows a schematic view of a double bed weft knitting structure, being a rib structure. 2 poly(p-phenylene-2,6-benzobisoxazole) fiber multifilament yarns 21 make stitches alternately on a needle 22 of front needle bed 23 and a needle 21 on back needle bed 24. An embodiment using this knitting structure is made on a circular double bed knitting machine with gauge 16 and using poly(p-phenylene-2,6-benzobisoxazole) fiber multifilament yarns of metrical number 36.

Other poly(p-phenylene-2,6-benzobisoxazole) fiber yarns, either spun or multifilament, with metrical numbers between 0.5 and 90 can be used. Double bed weft knitting machines with gauges between 5 and 32 can be used to provide alternative embodiments.

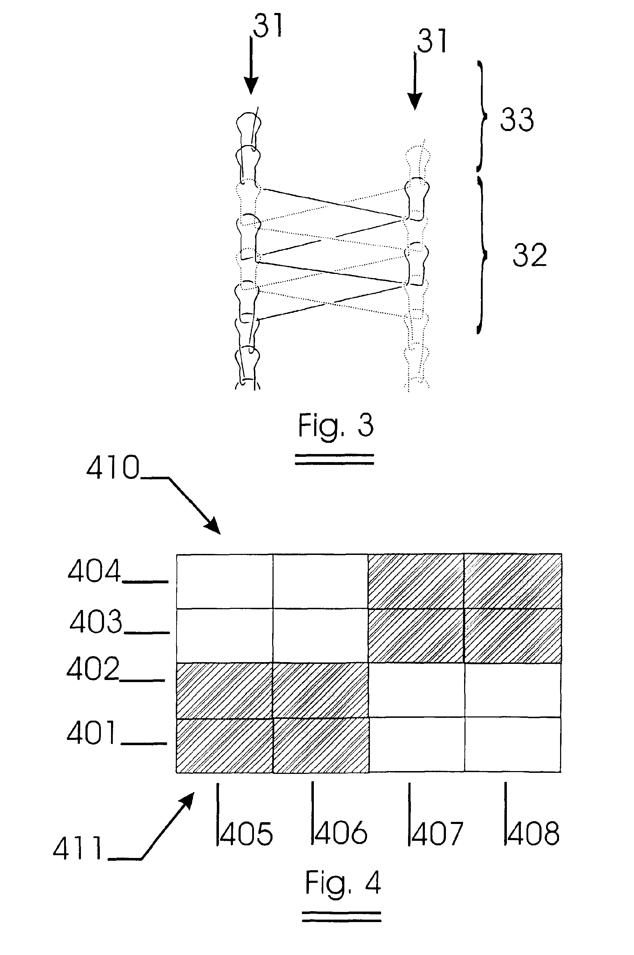

Figure 3 shows an other embodiment of the invention. It shows a part of a single bed warp knitted fabric where stitches are mutually transferred between adjacent stitch wales 31. These transfers are applied in the stitch wale zones 32, where as no connection between stitch wales are provided in the stitch wale zones 33. By alternating stitch wale zones 32 and 33, and making transfers for stitch wale zones 32 alternating to the left and right adjacent stitch wales, a single bed warp knitted fabric with polygonal openings is provided. A poly(p-phenylene-2,6-benzobisoxazole) fiber multifilament yarn with metrical number 36 is used to provide an embodiment of the invention on a single bed warp knitting machine gauge 12.

Other poly(p-phenylene-2,6-benzobisoxazole) fiber yarns, either spun or multifilament, with metrical numbers between 0.5 and 90 can be used. Double bed weft knitting machines with gauges between 5 and 32 can be used to provide alternative embodiments.

Other warp knitting structures, either single or double bed knitting structures, can be used to provide alternative embodiments. E.g. inlay yarns or fall plate techniques can be used to connect adjacent wales to each other.

An other embodiment of the invention is provided by weaving a poly(p-phenylene-2,6-benzobisoxazole) fiber multifilament yarn, e.g. using a weaving structure called "Atlas weaving structure" as shown in figure 4. Weft yarns 401 and 402 are to be seen on the front side of the fabric 410, above the warp yarns 405 and 406. Weft yarns 401 and 402 are beyond warp yarns 407 and 408, so they are to be seen on the back side 411 of the fabric. Weft yarns 403 and 404 are beyond warp yarns 405 and 406, so to be seen on the back side 411, whereas they are above warp yarns 407 and 408, so they are to be seen on the front side 410.
An embodiment of the invention is provided using a poly(p-phenylene-2,6-benzobisoxazole) fiber multifilament yarn with metrical number 36.

It is clear that other weaving structures, such as e.g. a plain weaving structure, a satin structure or a twill structure provides alternative embodiments of the invention.

Other poly(p-phenylene-2,6-benzobisoxazole) fiber yarns, either spun or multifilament, with metrical numbers between 0.5 and 90 can be used.

## Claims

1. A covering material, resistant to high temperatures and intended to be inserted between tools and plates of hot glass during glass heating, bending or tempering processes, wherein said covering material comprises a textile product, characterized in that said textile product comprises poly(p-phenylene-2,6-benzobisoxazole) fibers.

2. A covering material according to claim 1, characterized in that said textile product consists of comprises poly(p-phenylene-2,6-benzobisoxazole) fibers.

3. A covering material according to claim 1 or 2, wherein said textile fabric is a knitted fabric.

4. A covering material according to claim 3, wherein said knitted fabric is a weft knitted fabric.

5. A covering material according to claim 3, wherein said knitted fabric is a warp knitted fabric.

6. A covering material according to claim 4 or 5, wherein said knitted fabric is obtainable by knitting on a double bed knitting machine.

7. A covering material according to claim 4 or 5, wherein said knitted fabric is obtainable by knitting on a single bed knitting machine.

8. A covering material according to claim 3 to 7, wherein said knitted fabric is obtainable on a circular knitting machine.

9. A covering material according to claim 3 to 7, wherein said knitted fabric is obtainable on a flat knitting machine.

10. A covering material according to claim 3 to 9, wherein said knitted fabric is provided by a knitting structure, said knitted structure providing polygonal openings to said knitted fabric.

11. A covering material according to claim 4 to 10, wherein said knitted structure comprises different zones, at least one of said zones comprises poly(p-phenylene-2,6-benzobisoxazole) fibers.

12. A covering material according to claim 1 or 2, wherein said textile fabric is a woven fabric.

13. A covering material according to claim 1 or 2, wherein said textile fabric is a braided product.

14. A covering material according to claim 1 or 2, wherein said textile fabric is a needle punched fabric.

15. A covering material according to claim 14, wherein said needle punched fabric is a circular needle punched product.

16. A covering material according to claim 14 or 15, wherein said needle punched fabric is calandered after needle punching operation.

17. A covering material according to claim 14 to 16, wherein said needle punched fabric is perforated.

18. Use of a covering material according to any of preceding claims to cover a tool, contacting glass during glass heating, bending or tempering process.

19. A method of moulding glass plates hereby preventing glass from spontaneously tempering during the moulding, said method comprising the following steps:
(a) heating a glass plate to be mould;
(b) moulding the hot glass plate;
(c) tempering the moulded glass plate;
(d) providing a fabric out of poly(p-phenylene-2,6-benzobisoxazole) fibers as separation cloth between the glass plate and a tool, wherein the thermal insulation properties of said poly(p-phenylene-2,6-benzobisoxazole) fibers prevent said glass plate from spontaneously tempering.
